# EUROPÄISCHE PATENTSCHRIFT

(11) **EP 3 355 677 B1**
(45) Veröffentlichungstag und Bekanntmachung des Hinweises auf die Patenterteilung: **14.10.2020**
(21) Anmeldenummer: 16775464.7
(22) Anmeldetag: 21.09.2016
(51) Int. Cl.: A01D 41/14, A01D 45/02

(54) **VORRICHTUNG ZUR ERNTE VON STÄNGELIGEM HALMGUT**
HARVESTING DEVICE FOR STANDING CROP
DISPOSITIF DE RÉCOLTE

(30) Priorität: 28.09.2015 DE 102015116372
(43) Veröffentlichungstag der Anmeldung: 08.08.2018
(73) Patentinhaber: Carl Geringhoff GmbH & Co. KG, 59227 Ahlen (DE)
(72) Erfinder: HEMMESMANN, André, 48336 Sassenberg (DE); GERSMANN, Thomas, 48231 Warendorf (DE); Beumker, Martin, 59329 Wadersloh (DE); SCHARMANN, David, 59269 Beckum (DE)
(74) Vertreter: Weeg, Thomas
(86) Internationale Anmeldenummer: PCT/EP2016/001577
(87) Internationale Veröffentlichungsnummer: WO 2017/054908

(56) Entgegenhaltungen:
- EP-A1- 0 091 635
- DE-A1-102011 008 723
- FR-A1- 2 550 911
- US-A- 3 982 384

## Beschreibung

Die vorliegende Erfindung bezieht sich auf eine Vorrichtung gemäß dem Oberbegriff des Anspruchs 1.

Die hier interessierenden Vorrichtungen zur Ernte von stängeligem Halmgut werden zumeist als Maispflückvorsätze an Mähdrescher angebaut, um damit Körnermais zu ernten. In den Maispflückvorsätzen werden die Maiskolben von den Stängeln getrennt, die Stängel und Blätter werden auf den Boden abgeworfen und die gepflückten Maiskolben werden in den Mähdrescher abgefördert, um sie dort auszudreschen. Der Pflückvorgang erfolgt mit den Pflückeinheiten, indem der Pflanzenstängel mit zumindest einem Pflückrotor nach unten gezogen wird, nachdem der Pflanzenstängel in den von zumindest einer seitlich angeordneten Pflückplatte begrenzten Pflückspalt eingelaufen ist. Wenn ein an dem Maisstängel hängender Maiskolben den Pflückspalt erreicht, bleibt er an der oder den Pflückplatten hängen und reißt vom Stängel ab, weil er breiter als der Pflückspalt ist. Der Stängel wird weiter nach unten gerissen und mit den Blättern als Restpflanze von Messern zerkleinert, die sich unterhalb der Pflückplatten befinden. Die gehäckselten Restpflanzenteile bilden eine Strohmatte, die von der Erntemaschine überfahren wird. Die mit den Umlaufförderern, wie beispielsweise Kettenförderern oder Riemenförderern, endlos umlaufenden Mitnehmer erfassen die abgetrennten Maiskolben und fördern diese in den Bereich der Querförderschnecke, die die abgetrennten Maiskolben mittig der Vorrichtung zusammenführt und nach hinten an den Mähdrescher abgibt. Üblicherweise werden in einer Pflückeinheit neben den Pflückplatten, den Pflückrotoren und der Zerkleinerungsvorrichtung noch zwei Umlaufförderer, die beispielsweise Förderketten oder Riemen aufweisen, verwendet, die in einer Ebene oberhalb der Pflückplatten und zu beiden Seiten des Pflückspalts angeordnet sind. Die Pflückrotoren und die Umlaufförderer, die einem Pflückspalt zugeordnet sind, in den eine Reihe des Ernteguts einläuft, werden über ein den Organen dieses Pflückspalts jeweils zugeordnetes Reihengetriebe angetrieben.

Die Umlaufförderer haben nicht nur die Aufgabe, die Maiskolben im Bereich der Pflückspalte abzufördern, sie dienen im Bereich des vorderen Umlenkrades auch dem Zweck, auf dem Feld liegende Maisstängel zu erfassen, anzuheben und einen Einlauf dieser liegenden Maisstängel in den Pflückspalt zu ermöglichen. Dazu sollte der Umlaufförderer im vorderen Bereich möglichst tief auf den Boden herunter reichen. Die Lage des tiefsten Punktes des Umlaufförderers wird durch die räumliche Anordnung des vorderen Umlenkrades bestimmt, da der Umlaufförderer bei einem Umlauf um das Umlenkrad wegen der Kreisform des Umlenkrades nur an einer Stelle seinen tiefsten Punkt erreicht.

Insbesondere unter schwierigen Erntebedingungen ist es wünschenswert, die Vorderseite des Maispflückers möglichst tief und bodennah zu führen, um möglichst alles Erntegut vom Boden aufnehmen zu können. Nach der Aufnahme des Ernteguts sollen die Körner nicht wieder als Verlust vom Maispflücker herunterfallen. Um Verluste zu vermeiden, ist es vorteilhaft, den Anstellwinkel der Vorrichtung möglichst flach zu halten. Bei einem flachen Anstellwinkel und einer bodennahen Führung entsteht allerdings das Problem, dass die Vorrichtung mit ihrer Unterseite dazu neigt, das Pflanzenmaterial aus der Strohmatte mitzunehmen und zu einem Haufen aufzuschieben, der schließlich bis in die Pflückeinheiten reicht und dort den Gutfluss des Ernteguts behindert. Zudem werden die Bauteile an der Unterseite der Vorrichtung durch Kontakt und Reibung mit den feuchten und schmutzbehafteten Pflanzenteilen, Anstößen an Steinen und sonstigem Bodenkontakt übermäßig verschlissen.

In der Schrift DE 203 03 819 U1 ist eine gattungsgemäße Vorrichtung offenbart. Eine vergleichbare Anordnung ist in der Schrift DE 20 2011 110 622 U1 gezeigt. Die dort gezeigten Pflückeinheiten mit der darauf jeweils ausgesetzten Fördereinheit verfügen über ein Reihengetriebe, das an das hintere Ende der Pflückeinheit angeflanscht ist. Das Reihengetriebe ist mit seiner Unterseite auf einen darunter befindlichen Querträger aufgesetzt und darauf über Klemmbrücken in seiner Einbaulage fixiert. Der Anstellwinkel der Pflückeinheiten ist vergleichsweise steil. Abgesehen von der Häckseleinrichtung bildet der Querträger im hinteren Bereich der Vorrichtung und hinter den Pflückeinheiten dadurch annähernd den tiefsten Punkt der Vorrichtung. Der Querträger ist unterhalb der Pflückeinheiten angeordnet und ragt als eine den Materialfluss der gehäckselten Pflanzenbestandteile störende Kontur aus der Oberfläche der Vorrichtung an der Unterseite heraus. Wenn die Pflückeinheiten durch ein weiteres Absenken des Querträgers in einen flacheren Anstellwinkel abgesenkt würden, schöbe der Querträger die auf den Boden abgeworfenen gehäckselten Pflanzenreste auf.

Eine gattungsgemäße Vorrichtung ist in der Schrift DE 10 2011 008 723 A1 offenbart. Der Erntevorsatz hat keinen gesonderten Rahmen, sondern er ist aus mehreren Aluminium-Strangguss-Hohlprofilen zusammengesetzt. An das den Boden bildende Strangguss-Hohlprofil sind die Getriebe der Pflückereinheiten vorderseitig angesetzt. Gegenüber einem Rahmen, der aus einem Querträger und daran befestigten Längsträgern aufgebaut ist, ergeben sich materialbedingt hohe Herstellkosten, eine schlechte Reparierbarkeit und eine geringere Elastizität des Vorsatzes bei der Ernte, wenn der Erntevorsatz einen Boden- oder Fremdkörperkontakt hat.

Wenn in dieser Beschreibung von vorne oder hinten die Rede ist, so ist diese Angabe immer auf die Ausrichtung der Vorrichtung auf den stehenden Bestand des Ernteguts hin gemeint. Dabei ist vorne der Bereich, mit dem die Vorrichtung in den stehenden Bestand gefahren wird, und hinten die Richtung, in die das von der Vorrichtung gesammelte Erntegut an den Mähdrescher abgegeben wird.

Es ist die Aufgabe der vorliegenden Erfindung, die bekannten Vorrichtungen so zu gestalten, dass diese mit einem flacheren Anstellwinkel der Pflückeinheiten betrieben werden können, ohne dass diese dabei mit ihrer Unterseite Erntegutreste zu Haufen aufschieben.

Die Aufgabe wird für eine gattungsgemäße Vorrichtung durch das Kennzeichen des Anspruchs 1 gelöst.

Durch die in horizontaler Richtung gleich hohe Anordnung des Querträgers und der Reihengetriebe ergibt sich eine flachere Unterbodenkontur, die einen flacheren Anstellwinkel der Pflückeinheiten erlaubt, ohne dass deshalb das Risiko steigt, dass dann die Vorrichtung mit dem Unterboden gehäckseltes Erntegut aus der Strohmatte zu unerwünschten Haufen aufschieben könnte. Die gleich hohe Anordnung bedeutet nicht, dass das der oder die Rohre des Querträgers und das Reihengetriebe jeweils eine gleiche Bauhöhe aufweisen und mit ihrer Unterseite oder Oberseite in derselben Höhe angeordnet sein müssten. Ein durch unterschiedliche Maße der Bauteile begründeter Versatz ist unkritisch. Die erfindungsgemäßen Vorteile stellen sich bereits ein, wenn die Bauteile so angeordnet sind, dass sie zumindest bereichsweise in derselben horizontalen Höhe angeordnet sind. Allein schon durch die Anordnung der Bauteile hintereinander anstelle von übereinander kann der Querträger und/oder das Reihengetriebe niedriger angeordnet werden, was beides zu einer flacheren Unterbodenkontur führt und einen flacheren Anstellwinkel der Pflückeinheiten zulässt. Der flachere Anstellwinkel der Pflückeinheiten verringert direkt die Verluste von Körnern und Maiskolben, die aus der Vorrichtung herausfallen. Die Umlaufförderer können weniger aggressiv ausgelegt werden, wodurch sich ebenfalls die Verluste und Bruchkornanteile verringern. Die bodennahe Führung der Vorrichtung in schwierigen Erntebedingungen ist vereinfacht möglich, weil die Vorrichtung besser und weiter unter liegende Pflanzen eintaucht und diese deshalb sicherer erfassen, aufnehmen und verarbeiten kann.

Ein weiterer Vorteil ist darin zu sehen, dass der reibungsbedingte Verschleiß der Bauteile an der Unterseite der Vorrichtung abnimmt. Durch die flachere und glattere Unterbodenkontur werden die Hohlräume verringert, in denen sich überhaupt Pflanzengutreste ansammeln und den Gutfluss behindern können. Die Vorrichtung gleitet deshalb besser über die Strohmatte aus gehäckselten Pflanzenresten hinweg. Der Querträger befindet sich nun in einer geschützteren Position, in der er weniger gefährdet ist, an Hindernisse anzustoßen und dabei beschädigt zu werden.

Wenn die Pflückeinheiten nicht über das Reihengetriebe, sondern über einen oder mehrere Längsträger mit dem Querträger verbunden sind, ergibt sich der zusätzliche Vorteil, dass auf die Längsträger einwirkende Kräfte nicht vom Getriebegehäuse, sondern über die Längsträger auf den Querträger und über diesen in den Rahmen der Vorrichtung eingeleitet werden. Während bei einer Verbindung über die Reihengetriebe die Getriebegehäuse auf die einwirkenden Lasten ausgelegt werden müssen, können die Getriebegehäuse nun viel leichter und kostengünstiger gestaltet werden. Je nach Anzahl der Pflückreihen vervielfältigt sich die dadurch erzielte Einsparung. Die Längsträger können als einfache Blechteile viel kostengünstiger und leichter an höhere Lastspitzen angepasst werden. Falls an den Längsträgern überlastbedingte Schäden auftreten sollten, sind diese viel schneller und kostengünstiger zu reparieren als bei Schäden an Getriebegehäusen. Die Reihengetriebe können aber zusätzlich ihrerseits mit dem Querträger verbunden sein, beispielsweise, um die Konstruktion insgesamt zu versteifen, die Abstützung der Reihengetriebe zu verbessern oder die Längsträger von Antriebseinflüssen zu entlasten.

Die Längsträger sind jeweils zumindest über eine hakenartige Lasche an dem Querträger aufgehängt. Die hakenartige Lasche schafft eine Verbindungsmöglichkeit, bei der die Haltekräfte vom Längsträger direkt über die Lasche in den Querträger übertragen werden. Die hakenartige Lasche ist dabei so geformt, dass sich allein aufgrund ihrer Form und des darauf einwirkenden Gewichts der anhängenden Bauteile eine selbsthemmende Verbindung zwischen der hakenartigen Lasche und dem Querträger einstellt, wenn der Längsträger mit der hakenartigen Lasche an den Querträger gehängt wird. Das vereinfacht die Montage, und die Zahl der für die Verbindung der Bauteile benötigten Teile wird verringert. Die Aufhängung über die hakenartige Lasche wird erst durch die horizontale Anordnung des Querträgers hinter dem Reihengetriebe anstelle einer vertikalen Schichtung mit dem Aufsatz des Reihengetriebes auf den Querträger möglich.

Am hinteren Ende des Längsträgers sind eine hakenartige Lasche im oberen Bereich des Längsträgers und eine weitere hakenartige Lasche und/oder ein Klemmstück im unteren Bereich des Längsträgers ausgebildet, und die beiden hakenartigen Laschen oder die Lasche des Längsträgers und das mit dem Längsträger verbundene Klemmstück umgreifen den Querträger formschlüssig. Durch die zweifachen hakenartigen Laschen oder die Lasche mit dem aufgesetzten Klemmstück ergibt sich eine sichere räumliche Fixierung des Längsträgers bei einer guten Abstützung und Übertragung der einwirkenden Kräfte vom Längsträger in den Querträger und zurück. Das Klemmstück kann den Querträger bereichsweise umgreifen, um dadurch einen guten Halt zu schaffen. Bei zwei Längsträgern pro Pflückeinheit ergibt sich auf diese Weise eine Vierpunktaufhängung dieser Pflückeinheit am Querträger über vier hakenartige Laschen, die schnell und leicht montiert ist, gleichwohl aber über eine hohe Festigkeit verfügt. In Querrichtung können die Längsträger an Längsträger einer benachbarten Pflückeinheit angelehnt sein, so dass eine zusätzliche Fixierung in Querrichtung verzichtbar ist. Es ist möglich, nur die äußeren Pflückeinheiten an ihrer jeweiligen Außenseite zu fixieren, um dadurch alle Pflückeinheiten der Vorrichtung in Querrichtung zu fixieren.

Nach einer Ausgestaltung der Erfindung ist der Querträger als Doppelrohr mit zwei höhenmäßig in einem Abstand zueinander angeordneten Rohren ausgebildet. Die Doppelrohr-Konstruktion ermöglicht eine in Längsrichtung der Maschine kurze Bauweise, die über den Abstand der beiden Rohre zueinander im Vergleich zu einem Einrohr-Querträger einen größeren Hebel zur Aufnahme der einwirkenden Kräfte schafft und über die Lage der beiden Rohre zugleich eine eindeutige Einbaulage der Pflückeinheiten und der Längsträger über die verwendeten Anschlussstücke vorgibt. Die Doppelrohre können jeweils eine runde Querschnittsform aufweisen, aber auch andere Querschnittsformen sind für jedes Rohr möglich, wie beispielsweise auch mehreckige, ovale oder andere Profilquerschnittsformen wie beispielsweise eine Knochenform. Auch das Rohr versteifende und den Längsträger räumlich festlegende Vorsprünge, Rippen oder Stege und dergleichen können am Profil ausgebildet sein. Es können Hohlprofile oder massive Profile verwendet werden. Die Doppelrohre bilden über ihre Länge hinweg eine Schienenbahn, an der die Längsträger und/oder die Reihengetriebe an den Anschlussstücken hängend nebeneinander aufgefädelt werden, um die Vorrichtung zusammen zu bauen. Von der Schienenbahn können die Bauteile im Reparaturfall auch leicht wieder durch Querverschiebung bis an ein seitliches Ende des Querträgers abgenommen werden. Bei schwierigeren Reparaturen einzelner Pflückeinheiten oder von einzelnen Längsträgern ist es auch möglich, eine einzelne nicht funktionstüchtige Pflückeinheit oder einen einzelnen Längsträger mit geringem Aufwand gegen eine Ersatz-Pflückeinheit beziehungsweise einen einzelnen Längsträger auszutauschen, um die Vorrichtung schnell wieder im Ernteeinsatz verfügbar zu haben.

Nach einer Ausgestaltung der Erfindung ist der Querträger als Blechkonstruktion gestaltet, die mit der Blechmulde der Querfördereinrichtung verbunden ist. Mit dem Begriff der Blechkonstruktion ist gemeint, dass der Querträger aus entsprechend geformten Blechen gebildet ist. Die Blechkonstruktion erhält ihre Festigkeit durch eine entsprechende Einformung von Sicken, Falten und Kanten in die Form des Ausgangsblechs. In die Blechkonstruktion können im Anschlussbereich der Längsträger Querschnittsformen eingearbeitet werden, über die die Längsträger mit der Blechkonstruktion formschlüssig verbunden werden können. Natürlich ist es alternativ oder ergänzend auch möglich, die Verbindung über Verbindungshilfsmittel wie Schrauben, Nieten und dergleichen herzustellen.

Nach einer Ausgestaltung der Erfindung sind die Reihengetriebe jeweils an einem oder zwei benachbarten Längsträgern und diese Längsträger am Querträger befestigt. Durch diese Konstruktion ergeben die Längsträger und ein entsprechendes Reihengetriebe ein Reihenmodul, das nur über die Längsträger mit dem Querträger verbunden ist. An dem Reihengetriebe und den Längsträgern können leicht die übrigen Komponenten der Pflückeinheiten befestigt werden. Auch Hauben, Halmteiler und andere Bauteile sind leicht an dem Reihenmodul anbaubar. Die Reihenmodule können leicht montiert und zu Reparaturzwecken ausgetauscht werden. Da die auf das Reihenmodul einwirkenden Kräfte über die Längsträger auf den Querträger übertragen werden, wird das Getriebegehäuse von diesen Lasten entlastet und kann entsprechend leichter ausgeführt werden.

Nach einer Ausgestaltung der Erfindung ist zumindest eine der hakenartigen Laschen ein einstückiger Bestandteil des aus einem Blechstück geformten Längsträgers. Wenn der Längsträger als Blechteil ausgeführt ist, kann die hakenartige Lasche ein Bestandteil des einstückigen Blechteils sein, das beim Stanzen oder Lasern der Blechplatine entsprechende Umfangskonturen aufweist. Durch Umformen des Blechteils können die hakenartigen Laschen in die gewünschte Form gebracht werden. Bei einem entsprechenden Design der Blechteile können dafür einfache Abkantungen der Blechteile ohne aufwendige Sonderwerkzeuge genügen. Die Laschen können aber auch herkömmlich an den Längsträger angeschweißt, geschraubt, genietet oder gefügt sein.

Nach einer Ausgestaltung der Erfindung weisen die Längsträger in ihren Seitenwänden im Bereich der Reihengetriebe Ausnehmungen zur Wellendurchführung auf. Durch die Ausnehmungen in den Seitenwänden der Längsträger ist es möglich, Antriebskräfte von einem Reihengetriebe auf ein benachbartes Reihengetriebe zu übertragen, indem einfach eine verbindende Welle zwischen die Reihengetriebe und durch die Ausnehmungen hindurch gesteckt wird. Wenn die Ausnehmungen als Löcher ausgebildet sind, die von genügend breiten Stegen der Seitenwände umgeben sind, wird die statische Belastbarkeit des Längsträgers durch die Ausnehmung nicht übermäßig eingeschränkt, auch wenn sich die Ausnehmung im horizontalen Überlappungsbereich des Reihengetriebes mit dem Querträger befindet. Die Ausnehmungen können wieder durch einfaches Stanzen oder Lasern in das Material der Seitenwände eingebracht werden.

Erfindungsgemäß verbindet der Querträger als Teil des Rahmens Längsgurte, die von einem hinteren Querrohr unter der Querfördereinrichtung hindurch nach vorne geführt sind, an ihren nach vorne weisenden Enden in Querrichtung miteinander. Der Querträger ist somit Teil eines Rahmenskeletts der Vorrichtung, das die in den Querträger eingeleiteten Kräfte aufnimmt, innerhalb der Rahmenstruktur verteilt und an die Trägermaschine überträgt. Das Rahmenskelett ist insgesamt vergleichsweise leicht, trotzdem aber ausreichend stabil, um die Pflückeinheiten zu halten und mittlere Stoßkräfte bei Kollisionen der Längsträger mit dem Boden aufzunehmen. Bei einer Verwendung von beabstandeten Doppelrohren als Querträger ergibt sich zudem gegenüber einem einfachen Rohr eine zusätzlich verbesserte Steifigkeit der Rahmenkonstruktion, die zur Gewichtsreduktion der Rahmenkonstruktion genutzt werden kann.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Seitenansicht einer Vorrichtung,
- Fig. 2:: eine Ansicht auf einen Teil der in Fig. 1 gezeigten Vorrichtung von schräg vorne,
- Fig. 3:: eine Seitenansicht auf ein Reihenmodul,
- Fig. 4:: eine Ansicht auf zwei am Querträger aufgehängte Reihenmodule von oben,
- Fig. 5:: eine Ansicht auf zwei am Querträger aufgehängte Reihenmodule von unten, und
- Fig. 6:: eine Ansicht auf zwei am Querträger aufgehängte Reihenmodule von schräg hinten.

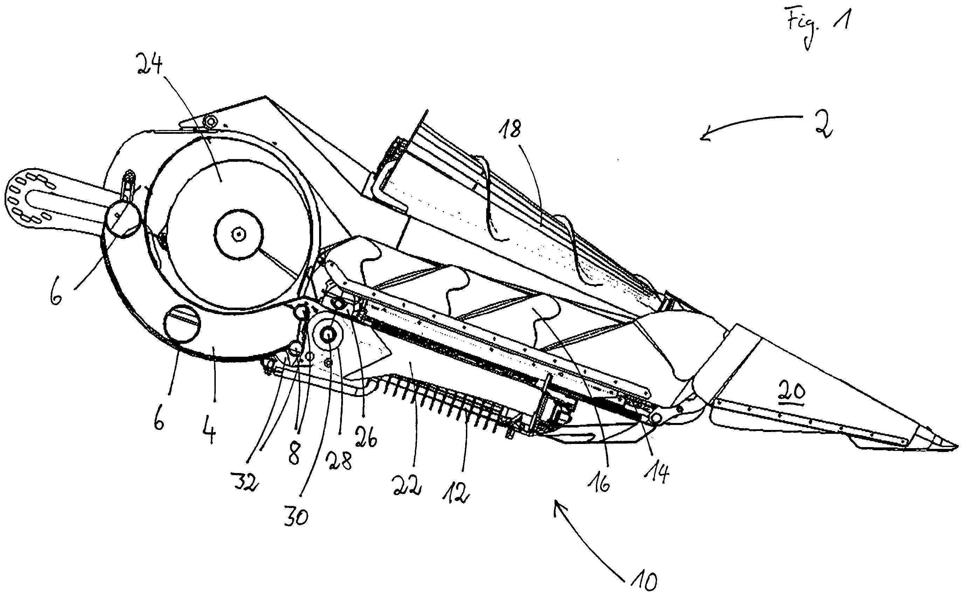

In Fig. 1 ist eine Seitenansicht auf eine Vorrichtung 2 gezeigt. Dieals Ausführungsbeispiel erläuterte Vorrichtung 2 ist ein Maispflücker, dessen Rahmen aus Längsgurten 4 und Querrohren 6 skelettartig zusammengesetzt ist. Die Längsgurte 4 sind von den beiden hinteren Querrohren 6 her nach vorne geführt und an ihren nach vorne weisenden freien Enden über den Querträger 8 in Querrichtung miteinander verbunden. Der Querträger 8 ist im Ausführungsbeispiel eine Doppelrohrkonstruktion, bei der zwei Rohre mit einem runden Querschnitt in einem vertikalen Abstand zueinander mit den Längsgurten 4 verbunden sind.

An dem Querträger 8 sind eine Anzahl von Pflückeinheiten 10 befestigt. Jede Pflückeinheit verfügt über einen Pflückrotor 12, der unterhalb von einer zugehörigen Pflückplatte angeordnet ist. Oberhalb der Pflückplatte befinden sich Umlaufförderer 14, die in Fig. 1 unter einer Abdeckhaube 16 nicht sichtbar sind. An der Seite der Vorrichtung 2 befindet sich ein rotierend angetriebener Halmteiler 18. Den Pflückeinheiten 10 vorgeordnet sind Pflückerspitzen 20, die dazu dienen, die einlaufenden Pflanzenstängel in die Richtung der jeweiligen Pflückspalte zu leiten.

Die Pflückeinheiten 10 sind an Längsträgern 22 befestigt. Die Pflückeinheiten 10 befördern die gepflückten Maiskolben nach hinten in den Bereich der Querfördereinrichtung 24, die mit ihren Schneckenblechen die Maiskolben mittig zusammenführt und nach hinten in einen Mähdrescher als Trägerfahrzeug abgibt.

Die Pflückeinheiten 10 werden jeweils über Reihengetriebe 26 angetrieben, die zwischen den Längsträgern 22 angeordnet sind. Die Längsträger 22 verfügen an ihren Seitenwänden über Ausnehmungen 28, durch die eine Welle 30 hindurchgeführt ist, über die die Reihengetriebe 26 ihre mechanische Antriebsleistung erhalten. Die Längsträger 22 sind über Laschen 32 mit dem Querträger 8 verbunden.

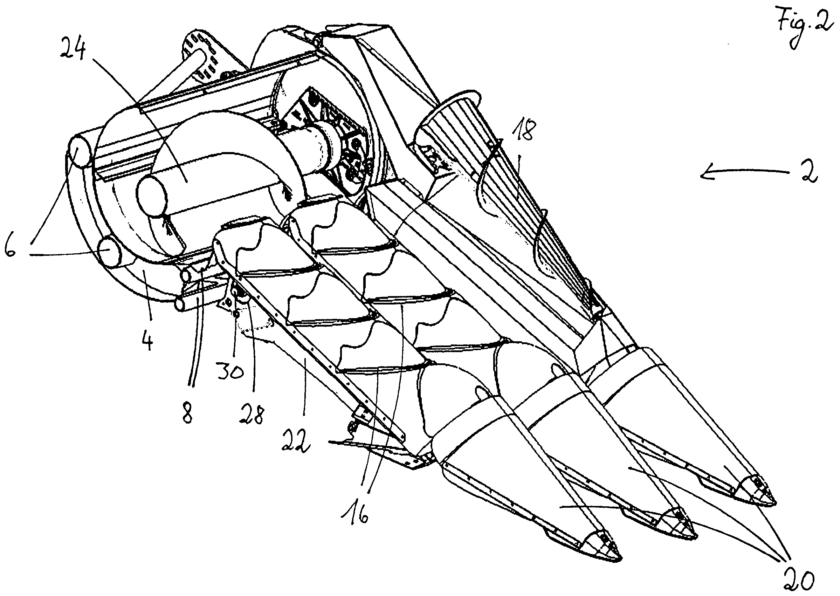

In Fig. 2 ist eine Ansicht von schräg vorne auf einen Teil in Fig. 1 gezeigten Vorrichtung 2 gezeigt. In dieser dreidimensionalen Perspektive ist gut erkennbar, dass die Reihenmodule gut von der Seite her auf die Querträger 8 aufgeschoben werden können. Die Pflückeinheiten 10 sind in dieser Ansicht nicht genauer sichtbar, weil sie von den Abdeckhauben 16 verdeckt sind.

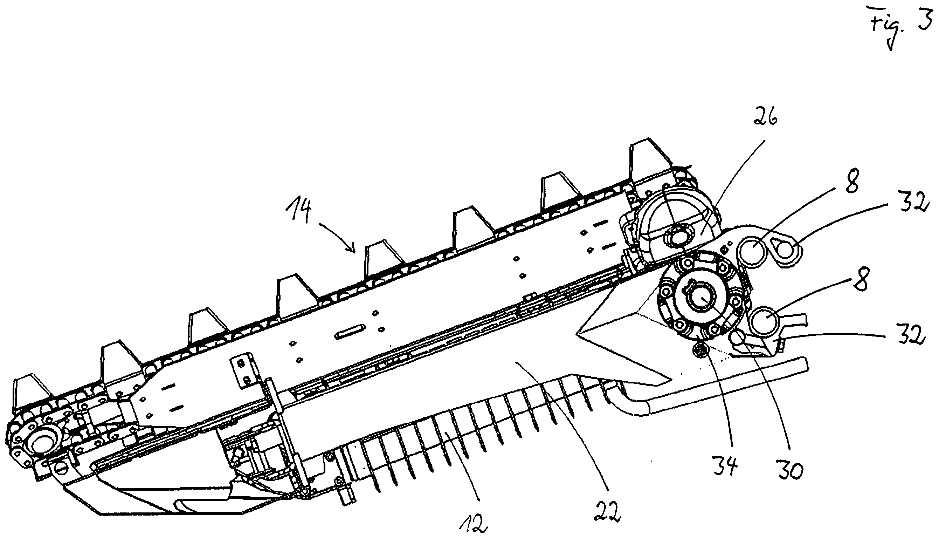

In Fig. 3 ist eine Seitenansicht auf ein Reihenmodul gezeigt. Das Reihenmodul besteht aus Längsträgern 22, zwischen denen ein Reihengetriebe 26 angeordnet ist. Auf dem Reihengetriebe 26 und dem Längsträger 22 ist ein Umlaufförderer 14 montiert.

Von dem Längsträger 22 teilweise verdeckt ist ein Pflückrotor 12. Auf die Welle 30 ist eine Wellenkupplung 34 aufgesetzt, die den Kraftschluss zwischen zwei benachbarten Reihengetrieben 26 herstellt. In der Seitenansicht in Fig. 3 ist gut erkennbar, dass der Längsträger 22 an seinem hinteren Ende eine hakenartige Lasche 32 im oberen Bereich des Längsträgers 22 und eine weitere hakenartige Lasche 32 im unteren Bereich des Längsträgers 22 aufweist. Die beiden Laschen 32 umgreifen von oben und unten her teilweise jeweils eines der beiden Rohre, die den Querträger 8 bilden. Durch die formschlüssige Ausbildung der Laschen 32 ist der Längsträger 22 spielfrei und fest an dem Querträger 8 gehalten. Nicht gezeigt ist in Fig. 3 die Anbindung der Querträger 8 an dem Rahmen der Vorrichtung 2.

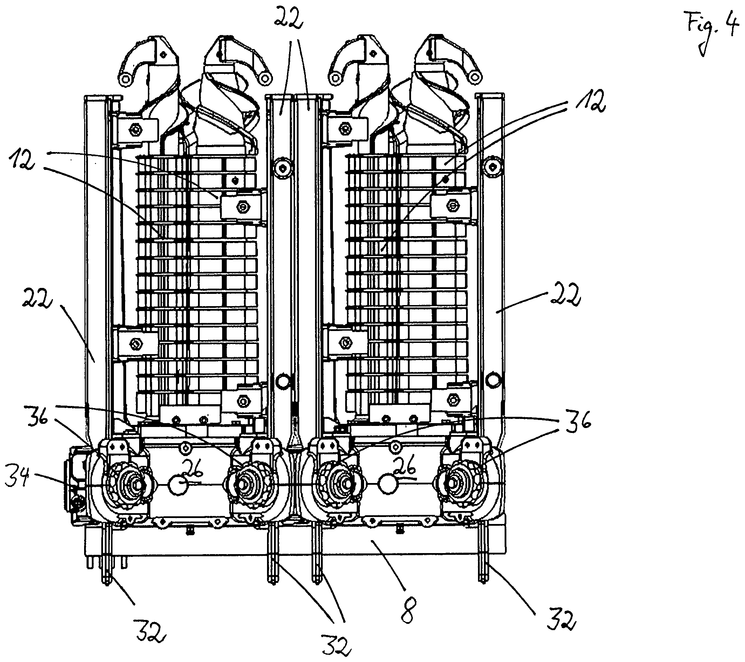

In Fig. 4 ist eine Ansicht auf zwei am Querträger 8 aufgehängte Reihenmodule von oben gezeigt. Aus der Ansicht von oben sind pro Reihenmodul zwei Pflückrotoren 12 zu sehen, deren freie Enden nach vorne weisen und die nach hinten in jeweiligen Reihengetrieben 26 gelagert sind. Die beiden Reihengetriebe 26 sind zwischen benachbarten Längsträgern 22 angeordnet. Bei dem in Fig. 4 gezeigten Reihenmodul sind die Umlaufförderer 14 noch nicht montiert. Sichtbar sind nur die Kettenräder 36, die auf die Reihengetriebe 26 zum Antrieb der Umlaufförderer 14 aufgesetzt sind. Die Kettenräder 36 sind zur horizontalen schräg angewinkelt und stehen seitlich etwas über das Gehäuse der Reihengetriebe über. In den Zwischenraum zwischen den schrägen Ästen für die Kettenräder 36 können die Wellenkupplungen 34 auf der Ebene der Welle 30 untergebracht werden.

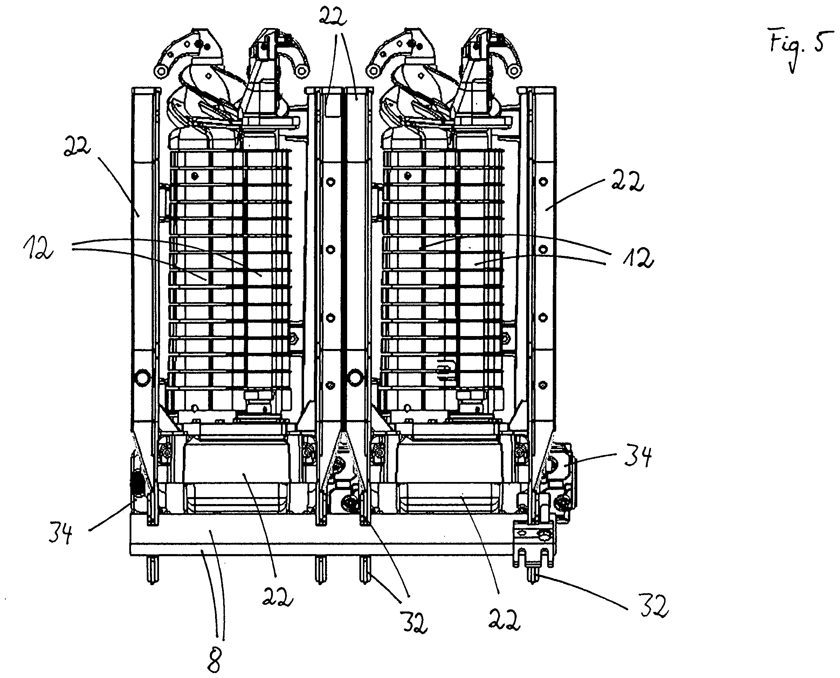

Dies ist auch gut in der Fig. 5 erkennbar, die eine Ansicht auf zwei am Querträger aufgehängte Reihenmodule von unten zeigt.

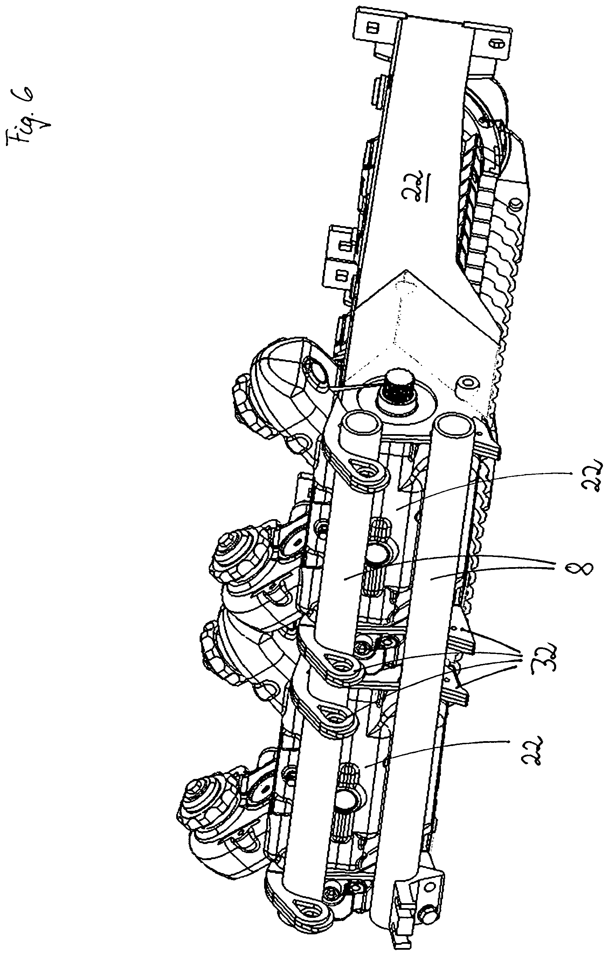

In Fig. 6 ist eine Ansicht auf zwei am Querträger aufgehängte Reihenmodule von schräg hinten gezeigt. Aus der Ansicht von schräg hinten ist gut erkennbar, dass die beiden Rohre des Querträgers 8 in einer horizontalen Ebene zu den Reihengetrieben 22 der Pflückeinheiten 10 angeordnet sind. Die Äste, an denen die Kettenräder 36 zum Antrieb der Umlaufförderer 14 auf Wellen montiert sind, überragen den Querträger 8, das Gehäuse der Reihengetriebe 26, die dazwischen befindlichen Wellenkupplungen 34 und die Laschen 32, mit denen die Längsträger 22 am Querträger 8 befestigt sind.

Das vorstehend beschriebene Ausführungsbeispiel dient nur der Erläuterung der Erfindung. Die Erfindung ist nicht auf das gezeigte Ausführungsbeispiel beschränkt.

## Patentansprüche

1. Vorrichtung (2) zur Ernte von stängeligem Halmgut mit einer Anzahl von nebeneinander am Rahmen der Vorrichtung (2) angeordneten Pflückeinheiten (10), die jeweils zumindest einen Pflückrotor (12), einen Pflückspalt seitlich begrenzende Pflückplatten und diesen zugeordnete Fördereinheiten aufweisen, die als umlaufend angetriebene Umlaufförderer (14) ausgebildet sind, einem die Organe einer jeweiligen Pflückeinheit (4) antreibenden Reihengetriebe (26), zwischen den Pflückspalten angeordneten Längsträgern (22) zur Abstützung von Organen der Pflückeinheiten (10), einem Querträger (8), an dem die Pflückeinheiten (10) befestigt sind, einer stromabwärts der Fördereinheiten angeordneten Querfördereinrichtung (24), die Pflückeinheiten (10) sind an ihrer Rückseite über das Reihengetriebe (26) und über einen Längsträger (22) oder nur über einen Längsträger (22) mit dem Querträger (8) verbunden und der Querträger (8) ist in einer horizontalen Ebene angeordnet, in der auch die Reihengetriebe (26) der Pflückeinheiten (10) angeordnet sind, wobei die Längsträger (22) jeweils zumindest über eine hakenartige Lasche (32) an dem Querträger (8) aufgehängt sind und am hinteren Ende des Längsträgers (22) eine hakenartige Lasche (32) im oberen Bereich des Längsträgers (22) und eine weitere hakenartige Lasche (32) und/oder ein Klemmstück im unteren Bereich des Längsträgers (22) ausgebildet sind, und die beiden hakenartigen Laschen (32) und/oder die Lasche (32) des Längsträgers (22) und das mit dem Längsträger (22) verbundene Klemmstück umgreifen den Querträger (8) formschlüssig, **dadurch gekennzeichnet, dass** der Querträger (8) als Teil des Rahmens Längsgurte (4), die von einem hinteren Querrohr (6) unter der Querfördereinrichtung (24) hindurch nach vorne geführt sind, an ihren nach vorne weisenden Enden in Querrichtung miteinander verbindet.

2. Vorrichtung (2) nach Anspruch 1, **dadurch gekennzeichnet, dass** der Querträger (8) als Doppelrohr mit zwei höhenmäßig in einem Abstand zueinander angeordneten Rohren ausgebildet ist.

3. Vorrichtung (2) nach Anspruch 1 oder 2, **dadurch gekennzeichnet, dass** der Querträger (8) als Blechkonstruktion gestaltet ist, die mit der Blechmulde der Querfördereinrichtung (24) verbunden ist.

4. Vorrichtung (2) nach einem der vorhergehenden Ansprüche, **dadurch gekennzeichnet, dass** die Reihengetriebe (26) jeweils an einem oder zwei benachbarten Längsträgern (22) und diese Längsträger (22) am Querträger (8) befestigt sind.

5. Vorrichtung (2) nach einem der vorhergehenden Ansprüche, **dadurch gekennzeichnet, dass** zumindest eine der hakenartigen Laschen (32) ein einstückiger Bestandteil des aus einem Blechstück geformten Längsträgers (22) ist.

6. Vorrichtung (2) nach einem der vorhergehenden Ansprüche, **dadurch gekennzeichnet, dass** die Längsträger (22) in ihren Seitenwänden im Bereich der Reihengetriebe (26) Ausnehmungen (28) zur Wellendurchführung aufweisen.

## Claims

1. Device (2) for harvesting stalk-like stem crops, with a number of picking units (10), which are arranged side by side on the frame of the device (2) and each has at least one picking rotor (12), picking plates that laterally delimit a picking gap, and conveying units that are assigned to said picking plates and are designed as continuous conveyors (14) driven in circulation, said device also having a series gearbox (26) driving the elements of each picking unit (4), longitudinal beams (22) arranged between the picking gaps for supporting elements of the picking units (10), a transverse beam (8) to which the picking units (10) are attached, a transverse conveying device (24) arranged downstream of the conveying units, the picking units (10) are connected to the transverse beam (8) at their rear sides via the series gearbox (26) and via a longitudinal beam (22) or only via a longitudinal beam (22) and the transverse beam (8) is arranged in a horizontal plane in which the series gearboxes (26) of the picking units (10) are arranged, wherein each of the longitudinal beams (22) is suspended on the transverse beam (8) via at least one hook-like bracket (32) and at the rear end of the longitudinal beam (22), one hook-like bracket (32) is formed in the upper region of the longitudinal beam (22) and an additional hook-like bracket (32) and/or a clamping element is formed in the lower region of the longitudinal beam (22), and the two hook-like brackets (32) and/or the bracket (32) of the longitudinal beam (22) and the clamping element connected to the longitudinal beam (22) encompass the transverse beam (8) in a positive connection, **characterised in that** the transverse beam (8), as part of the frame, connects longitudinal braces (4) to one another in the transverse direction at their forward-facing ends, said longitudinal braces extending from a rear transverse tube (6) underneath the transverse conveying device (24) and through to the front.

2. Device (2) according to claim 1, **characterised in that** the transverse beam (8) is formed as a double tube with two tubes arranged spaced from one another vertically.

3. Device (2) according to claim 1 or 2, **characterised in that** the transverse beam (8) is designed as a sheet metal structure, which is connected to the sheet metal trough of the transverse conveying device (24).

4. Device (2) according to any one of the preceding claims, **characterised in that** each series gearbox (26) is attached to one or to two adjacent longitudinal beams (22), and these longitudinal beams (22) are attached to the transverse beam (8).

5. Device (2) according to any one of the preceding claims, **characterised in that** at least one of the hook-like brackets (32) is an integral part of the longitudinal beam (22), which is formed from a piece of sheet metal.

6. Device (2) according to any one of the preceding claims, **characterised in that** the longitudinal beams (22) have recesses (28) in their side walls, in the region of the series gearboxes (26), through which a shaft can be fed.

## Revendications

1. Dispositif (2) pour la récolte de produits de cultures à tiges comprenant une pluralité d'unités de cueillette (10) disposées les unes à côté des autres sur le cadre du dispositif (2) et qui présentent respectivement au moins un rotor de cueillette (12), des plaques de cueillette délimitant latéralement une fente de cueillette et des unités de transport associées à celles-ci qui sont réalisées sous la forme de transporteurs rotatifs (14) entraînés en rotation, un entraînement en ligne (26) entraînant les organes de chaque unité de cueillette (4), des supports longitudinaux (22) disposés entre les fentes de cueillette pour soutenir les organes des unités de cueillette (10), un support transversal (8) auquel sont fixées les unités de cueillette (10), un moyen de transport transversal (24) disposé en aval des unités de transport, les unités de cueillette (10) sont reliées au support transversal (8) sur leur face arrière par le biais de l'entraînement en ligne (26) et par le biais d'un support longitudinal (22) ou seulement par le biais d'un support longitudinal (22) et le support transversal (8) est disposé dans un plan horizontal dans lequel sont également disposés les entraînements en ligne (26) des unités de cueillette (10), dans lequel les supports longitudinaux (22) sont respectivement suspendus au support transversal (8) au moins par le biais d'une languette en forme de crochet (32) et, à l'extrémité arrière du support longitudinal (22), sont réalisées une languette en forme de crochet (32) dans la zone supérieure du support longitudinal (22) et une autre languette en forme de crochet (32) et/ou une pièce de serrage dans la zone inférieure du support longitudinal (22), et les deux languettes en forme de crochet (32) et/ou la languette (32) du support longitudinal (22) et la pièce de serrage reliée au support longitudinal (22) saisissent le support transversal (8) par complémentarité de forme, **caractérisé en ce que** le support transversal (8) faisant partie du cadre relie des courroies longitudinales (4) les unes aux autres dans la direction transversale au niveau de leurs extrémités tournées vers l'avant, lesquelles courroies sont dirigées vers l'avant par un tube transversal arrière (6) sous le moyen de transport transversal (24).

2. Dispositif (2) selon la revendication 1, **caractérisé en ce que** le support transversal (8) est réalisé sous la forme d'un tube double avec deux tubes disposés à une certaine distance l'un de l'autre dans le sens de la hauteur.

3. Dispositif (2) selon la revendication 1 ou 2, **caractérisé en ce que** le support transversal (8) est formé par une construction en tôle qui est reliée à la benne en tôle du moyen de transport transversal (24).

4. Dispositif (2) selon une des revendications précédentes, **caractérisé en ce que** l'entraînement en ligne (26) est respectivement fixé à un ou deux supports longitudinaux (22) adjacents et ces supports longitudinaux (22) sont fixés au support transversal (8).

5. Dispositif (2) selon une des revendications précédentes, **caractérisé en ce qu'**au moins une des languettes en forme de crochet (32) est un composant d'un seul tenant du support longitudinal (22) formé à partir d'une pièce de tôle.

6. Dispositif (2) selon une des revendications précédentes, **caractérisé en ce que** les supports longitudinaux (22) présentent des évidements (28) pour la réalisation d'arbres dans leurs parois latérales au niveau de l'entraînement en ligne (26).
